# EUROPEAN PATENT SPECIFICATION

(11) **EP 1 423 016 B1**
(45) Date of publication and mention of the grant of the patent: **04.10.2006**
(21) Application number: 02755233.0
(22) Date of filing: 23.08.2002
(51) Int. Cl.: A22C 13/00

(54) **COLLAGEN CASING**
KOLLAGENHÜLLE
ENVELOPPES A BASE DE COLLAGENE

(30) Priority: 25.08.2001 GB 0120756
(43) Date of publication of application: 02.06.2004
(73) Proprietor: Devro Plc, Glasgow G69 0JE (GB)
(72) Inventor: MORGAN, Trevor, Bothwell, Glasgow G71 8AL (GB); NORWOOD, Derek, Samuel, David, Irvine, Ayrshire KA11 1AF (GB); MARTIN, Gordon, David, Paisley, Renfrewshire PA1 3YJ (GB)
(74) Representative: Horner, Martin Grenville
(86) International application number: PCT/GB2002/003890
(87) International publication number: WO 2003/017770

(56) References cited:
- EP-A- 0 290 800
- WO-A-98/17120
- DE-A- 1 492 711
- DE-A- 3 333 387
- DE-A- 19 640 019
- FR-A- 2 097 896
- GB-A- 1 066 690
- US-A- 4 096 282
- US-A- 4 615 889
- DATABASE WPI Section Ch, Week 199412 Derwent Publications Ltd., London, GB; Class D12, AN 1994-096938 XP002219952 & JP 06 046741 A (NITTA GELATIN KK), 22 February 1994 (1994-02-22)

## Description

The present invention relates to the use of porcine collagen derived from pigs, generally pig skin (also known as pig hides), for the production of a collagen casing having improved properties. Casings are used for the production of sausages and other food products.

Artificial collagen films and casings made from reconstituted collagen derived from natural animal sources have been commercially available for many years. At present, the principal source of animal collagen is bovine collagen derived from the hides of cattle. After the cattle have been slaughtered, the hides are removed and the underlayer composed principally of collagen is split away. The bovine collagen is then mechanically commuted and formed into a gel in known manner. The gel is then extruded to form a casing. The casing is then cured, typically by change of pH and/or the use of cross-linking agents such as glutaraldehyde.

Collagen is also potentially available from a number of other sources, such as pigs, sheep, goats, avian, fish etc., but none of these have found widespread commercial use up to the present time. In particular, artificial collagen films and casings made from these sources, particularly porcine collagen, appear to have a number of disadvantages, particularly in having relatively low tensile strengths. Nonetheless, a porcine collagen film is currently available from Ed. Geistlich Sons Ltd., under the trade name Bio-Foil and is intended for wrapping hams. The collagen to fat ratio has been measured as being in the region 1.6:1 to 2.1:1. However, no porcine casing is commercially available. Reference is also made to patent publication GB2359241A.

It is, however, an object of the present invention to provide a porcine collagen casing having improved properties, particularly improved tensile strength.

In the prior art, attempts have been made to employ porcine-derived collagen, particularly collagen derived from pig intestines. Often, mixtures with bovine collagen are employed. Thus, US 4,407,839, Sjolander discloses the use of pig intestines, pig lungs or cow rumen to produce a collagen slurry in a manner involving the use of proteolytic enzymes. US 5,411,887 Sjolander discloses the production of a collagen film through the enzyme treatment of pig intestines. US 5,840,849 Loders Croklaan discloses the use of a mixture of bovine collagen and pig intestine collagen treated with proteolytic enzymes for the production of paste for co-extruded sausage casings.

US 5,229,497 Teepak discloses the use of impure connective tissue derived from a variety of animal sources, including cattle poultry, swine and sheep, for the production of collagen casings. Skin and bone are excluded. The process involves the use of up to three enzyme treatment stages and the removal of fat from the connective tissue can be accomplished by a number of possible options. The only practical example disclosed involves the use of desinewed beef shanks.

There are also a number of prior art documents which involve the use of collagen derived from pig skins or hides. US 4,196,223 Wilson Foods discloses the production of a collagen gel from pig skins and its subsequent coagulation and tanning to produce a collagen casing. However, the casing produced is said not to have adequate strength for use in commercial stuffing equipment (see US 4,615,889). US 4,615,889 Devro discloses the use of a mixture of bovine collagen and collagen derived from pork skin for the production of a collagen casing. GB915441 Armour gives an example of the use of pig skins for the production of a collagen film.

The production of collagen films or casings by processes involving proteolytic enzymes are complex and consequently costly and may not have achieved commercial use for that reason. In some instances, mixtures of bovine and porcine collagen have been used, presumably in order to achieve the necessary strength, In our experience, the production of collagen films or casings from purely porcine collagen using known processes leads to a product of poor tensile strength.

It is an object ofthe present invention to mitigate these problems and allow for the production of a porcine collagen product in an economic and cost effective manner.

The present invention is based on the discovery that the fat content of the collagen product must be brought to a reduced level compared to natural levels, and particularly the ratio of collagen to fat has been found to be important.

A first aspect ofthe present invention provides an extruded tubular food-product casing made from an extrudable gel; the casing, on a dry weight basis, comprising collagen, fat, and a humectant, and wherein the collagen content of the casing consists essentially of porcine collagen and the ratio of collagen to fat is at least 2.5 to 1.

It is to be understood that typically the ratio of collagen to fat in natural pig hides or skins is in the region 1:1 to 1.5:1 and is on average about 1.25:1. The present invention preferably uses such pork skins or pork hides as the porcine collagen source. However, other collagen-containing tissues, such as intestines may also be used.

The structural characteristics of pig skins are well known and are discussed for example in World Leather, October, 1997, page 85 - 90. Thus, pig skin is known to comprise from outside to inside an epidermis layer, dermis layer and subcutaneous fatty layer. The dermis layer is relatively thick compared to the epidermis and is the principal location of collagen fibres. The big bristles are also located in the dermis layer and Acones@ of fat tend to extend upwardly from the subcutaneous fatty layer through the dermis layer at the base of each bristle follicle. Thus, there tends to be a division between the collagen-containing dermis layer and the subcutaneous fatty layer. This division is less pronounced in younger pigs and more pronounced in older pigs.

There are a number of ways of increasing the natural ratio of collagen to fat in pig skins without damaging the collagen. One of the most effective ways is to carefully control the mechanical treatment of the pig skins in the tannery. The fresh pig skins can be subjected to mechanical defleshing which removes the subcutaneous fatty layer and some of the dermis layer to an extent that the ratio of collagen to fat is in the required ratio as described below. Fat may also be chemically removed by treatment with alkali, such as sodium hydroxide. Smaller amounts of fat may also be removed at other stages during the preparation of the extrudable gel. For example, once the pig skins have been mechanically disintegrated to form a suspension, the suspension may be allowed to stand and fat skimmed from the top. Other options include removal of fat by solvent extraction (using acceptable food agents such as liquid carbon dioxide) or enzyme treatments.

In another aspect of the invention, the percentage of fat in the porcine collagen casing is reduced to a level below 20%, particularly below 18% and especially below 16% by weight on a dry weight basis.

The ratio of collagen to fat is at least 2.5:1, more preferably at least 3, particularly at least 3.5 and especially at least 4:1. Higher ratios of collagen to fat above 10:1, and even above 20:1 may be achieved. However, the fat content is preferably controlled to achieve a good overall balance of properties in the final collagen casing. Preferred ranges include 2.5:1 to 20:1, particularly 3:1 to 15:1 and especially 3.5:1 to 10:1. Another particularly preferred range is 15:1 to 25:1. Preferably, the fat content is not less than 3% and especially not less than 1% by weight. Thus, a certain proportion of fat in the final casing improves the appearance ofthe casing, giving it an attractive sheen and where the casing is to be used around cooked products, tends to improve the cooking properties of the casing. The unsaturated nature of the pig fat may provide unexpected strength (e.g. via cross-linking). Thus, the amounts of other additives, such as glycerol or other humectants, included in the product may depend to an extent on the proportion of fat.

The object of the present invention is the provision of a collagen product substantially from porcine sources. The inclusion of bovine collagen is not preferred but minor amounts, preferably less than 10% and particularly less than 5%, of non-bovine collagens derived from sheep, poultry, birds, fish etc., may optionally be included.

The collagen properties can be varied by mixing collagen derived from young pigs (about 4 months old) and older pigs (about 3 years) in ratios of 0:100 to 100:0 (particularly 30:70 to 70:30). Intermediate age pig collagen can also be used in corresponding proportions. Older material tends to increase strength.

The porcine collagen may be derived from pig hide or intestine. The hides may be full hides or split hides from sows or young pigs, and may be alkaline treated or limed. Preferably, at least 85% and particularly at least 90% of the porcine collagen content of the casing is derived from pig hide.

Apart from the required defatting, the porcine collagen may be processed in conventional manner to produce an extrudable aqueous gel. Generally, the porcine raw material is defatted and then disintegrated firstly in a mincing machine and secondly in a plate mill to produce a fibrous paste. Fat may be mechanically removed from the fibrous paste. The paste is then acidified with a strong mineral acid such as hydrochloric add or with an organic acid such as lactic acid to swell the collagen. Alternatively, an alkaline swollen gel could be produced according to known techniques. Other additives including humectants such as glycerol (preferably in an amount of 14 to 25, particularly 16 to 22% on a dry weight basis) and sorbitol together with other desired known additives (e.g. flavours, colours and spices) may be included. The gel may also include coagulating agents such as minor amounts of glutaraldehyde, glyoxal, liquid smoke, a sugar such as dextrose or multivalent cation (such as aluminium) which are effective to cross-link the collagen film and thereby increase its strength. This increase in strength may, however, be at the expense ofreduced elasticity. The gel is then homogenised, filtered and allowed to stand prior to extrusion.

A proportion of the glycerol may be replaced by the same weight of a food grade polyol, such as sorbitol or mannitol or mixtures thereof. The casing may include an agent for modifying the shrink tension of the casing. The agent may be cellulose, methyl cellulose, methyl hydroxypropyl cellulose, non-ionic alginates (preferably propylene glycol alginate), gums or starches or combinations thereof.

Generally, the porcine collagen forms at least 85% of the gel, preferably at least 90% of the gel on a dry weight basis. Generally, the collagen solids content of the gel is 3.5 to 10%, preferably 4 to 7% by weight.

Extrusion is generally carried out through an annular die and the extruded material generally has a wet thickness in the range 0.2 to 2 mm. The extruded casing may be further treated with a liquid coagulating agent such as a salt bath (for example, sodium chloride or ammonium sulphate solution), an alkali bath (for example sodium carbonate) or a glutaraldehyde solution to coagulate the casing. Coagulation may also be achieved using gaseous alkali such as ammonia gas. These treatments may be applied before or after drying the casing.

Of course, the casing could be further processed into other products. For example, it could be slit and twisted to form an edible string in known manner. The string could be used to form netting. The string and netting may be used, for example, for trussing pork roast, shoulder, belly or hams.

Porcine collagen casings of the present invention have been found to have a cold wet tensile strength in the extrusion direction greater than 1kg, particularly greater than 1.5 kg, generally greater than 2 kg and preferably at least 2.5kg by the test methods disclosed herein. The hot acid tensile strength is usually greater than 0.5 kg and particularly greater than 1.0 kg. The burst strength of the casing is usually at least 0.5Kg, preferably at least 0.6Kg and more preferably at least 0.8Kg.

The porcine collagen casing has good strength and elasticity, particularly in the dry state, and good handleability. The presence of residual fat reduces the drying rate and improves normal shelf-life-by maintaining suppleness. The porcine collagen casing exhibits good strength, good cooking abilities, good appearance and integrity. Thus, further aspects of the present invention include a process of producing the porcine collagen casing; as well as a cased food product, particularly a sausage. Evidently, the invention allows the production of pork sausages which have a pork casing formed entirely from porcine collagen.

Embodiments of the present invention will now be described by way of example only.

Throughout these examples, the weight percentages will approximate 100% but within the limits of experimental error.

### Defatting

The raw material is normally received as a salted pig skin (hide).

A typical defatting process would involve some or all of the following steps:
1. Initial Soak - Add the skins to the processing drum and add between 150% to 200% equivalent weight of fresh clean water at 28 deg C. Rotate for up to hour and drain the vessel.
2. Main Soak - Add water (28 to 32 deg C) equivalent to the 100% to 150% weight of raw hides. Add up to 0.5% of sodium carbonate or the like (helps to rehydrate through elevating the pH) and up to 0.2% by weight of wetting agent such as Danol WA (helps rehydration and removal of surface fats).
3. Fat removal - Remove hides from the vessel. Feed the whole hide pieces into a proprietary fleshing machine such as those made by Poletto, Rizzi, Mosconi & Persico. Set the cutter height to an appropriate position to effect good visual fat reduction without unduly removing good collagen.
4. Unhair-Reweigh material into vessel. Add water (about 20 deg C) at up to 200% equivalent weight of hides. Add up to 3% by weight of sodium sulfide or up to 5% by weight of sodium hydrosulfide, a wetting agent at up to 0.2% by weight, a strong alkali is usually added, such as sodium hydroxide or lime to maintain the pH at 11 to 12 for the duration of the processing time. A liming auxiliary such as Erhavit MC or Aglutan PR at up to 0.3% by weight are usually added also. Typical processing times are between 12 hours and 60 hours before the liquor is drained.
5. Wash 1- Add fresh clean water (200% equivalent weight) along with a wetting agent (typically 0.2%) and rotate for 30 minutes then drain.
6. Wash 2 - Add fresh clean water (200% equivalent weight) and rotate for up to 30 minutes then drain. This stage can be repeated up to 4 times to remove residual surfactant (no evidence of foam in the vessel).
7. Decalcification - Remove excess calcium ions (only where lime was previously used) with ammonium sulphate solution to a pH of around 9.
8. Buffer-Reduce pH of hides to around 2.5 to 6 with a solution of citric acid and sodium citrate, or hydrochloric acid.
9. Final washes- Wash hides with batches of fresh clean water to remove dissolved salts to a level where the drained liquor conductivity falls below 200µmhos.

### EXAMPLES 1 & 2

Young porcine raw material was partially defatted and then disintegrated firstly with a mincing machine and then a plate mill to produce a fibrous paste. If required, the paste could be diluted with water, and excessed fat skimmed off.

This material was then blended together with a mixture of cellulose and acid to form a swollen aqueous paste of constituents:

| **Example 1** | | **Example 2** | |
|---|---|---|---|
| Collagen | 5% | Collagen | 4.5% |
| HCl | 0.165% | lactic acid | 1.125% |
| Cellulose | 1% | cellulose | 1% |
| Fat | 1.8% | fat | 1.6% |

Each paste was homogenised through a dairy homogeniser to produce a cohesive, smooth swollen gel.

Each gel was extruded, and simultaneously inflated with air through an annular extruder, to a wet wall thickness of approximately 0.4 mm, onto a continuous support belt contained within an ammonia gas chamber.

The coagulated tubular casing was passed through a water wash bath to remove residual salt and then a further bath containing glycerol and sodium carboxymethylcellulose to soften the casing.

The softened casing was dried, in an inflated state, with a multi-zone drier at temperatures between 60 deg C and 120 deg C.

The resultant dried tubular casing was shirred using a proprietary shirring device.

After shirring the casing moisture level was increased to around 20% prior to testing.

### Final Product Properties/Attributes

### A) Constituents (Dry Weight Basis) and excluding oil added at shirring.

| Example 1 | | Example 2 | |
|---|---|---|---|
| Collagen % | 51.5 | Collagen % | 49.6 |
| Glycerol % | 19.1 | Glycerol % | 21.2 |
| Cellulose % | 10.3 | Cellulose% | 11.0 |
| Fat % | 18.6 | Fat % | 17.6 |
| Collagen: fat ratio 2.8:1 | | Collagen: fat ratio 2.8:1 | |

### B) Physical-Test Data

| Test Number | 1 | 2 | 3 |
|---|---|---|---|
| | Cold Wet Average Tensile (Kg) | Hot Acid Average Tensile (Kg) | Weight (g/m) |
| Ex 1 | 2.48 | 1.02 | 4.27 |
| Ex 2 | 2.91 | 1.68 | 3.00 |

### C) Product Performance

The products perform as well as fresh bovine casings under the 3 standard UK fresh Pork cooking methods using standard fresh pork recipe and cooked 24 hours after filling and storage at around 4 deg C: Deep Fat Fry, Grill and Pan Fry.
i) Deep fat fry - Product is cooked in hot oil at 165 to 185 deg C for 5 minutes.
ii) Grill - Product is cooked under a grill plate at 155 to 165 deg C for 18 minutes. During this time the products are turned frequently to achieve even browning and cooking.
iii) Pan Fry - Product is cooked in shallow oil at 155 to 165 deg C for 18 minutes.

During this time the sausages are turned frequently to achieve even browning and cooking.

It was a surprise that the product strength was so high (both cold wet tensile and hot acid tensile). The normal experience is that such a high fat content would adversely affect the product strength. In comparison a normal bovine product with a weight similar to Example 2 and with a fat content of around only 1% (excluding oil added during the shirring operation) would exhibit a cold tensile value close to 3.2Kg and a hot acid tensile value close to 1.5Kg.

Manufacturing casings with high oil level, such as oil-based dye injected casings adversely reduces the strength over similar undyed casings.

### Example 3 and 4 :

1. Sow skins were prepared by rehydrating, cleaning, unhairing and defatting using the method previously described. This resulted in the skin having a ratio of collagen:fat of around 30:1
2. The sow skins were then further washed and buffered to a pH of around 6.5 using a mixture of sodium citrate and citric acid. Following this stage the skins were washed to reduce the dissolved salts.
3. This sow skin was next disintegrated; firstly with a mincing machine and then a plate mill to produce a fibrous paste.
4. This paste was blended together with a mixture of cellulose & acid to form a swollen aqueous paste of constituents:

| Example 3 | | Example 4 | |
|---|---|---|---|
| Collagen | 6% | Collagen | 5.5% |
| HCl | 0.24% | HCl | 0.275% |
| Cellulose | 1% | Cellulose | 1% |
| Fat | 0.31% | Fat | 0.19% |

5. Each paste was homogenised through a dairy homogeniser to produce a cohesive, smooth swollen gel.
6. Each gel was extruded, and simultaneously inflated with air through an annular extruder, to a wet wall thickness of approximately 0.4mm, onto a continuous support belt contained within an ammonia gas chamber.
7. The coagulated tubular casings were passed through a water wash bath to remove residual salt and then a further bath containing glycerol to soften them.
8. The softened casings were dried, in an inflated state, with a multi-zone drier at temperatures between 60 deg C and 120 deg C.
9. The resultant dried tubular casings were shirred using a proprietary shirring device.
10. After shirring the casings' moisture level was increased to around 20% prior to testing.

### Final product properties/attributes:

### A) Physical Test data

| | Cold Wet Average Tensile (Kg) | Hot Acid Average Tensile (Kg) | Weight (g/m) |
|---|---|---|---|
| Ex 3 | 2.46 | 0.97 | 3.7 |
| Ex 4a | 2.72 | 1.64 | 2.8 |
| Ex 4b | 2.93 | 1.38 | 2.6 |

### B) Product Performance

i- Each casing was stuffed to a nominal 21mm diameter using a handtmann VF80 vacuum filler operating at the full speed setting of 99.
ii- The products performed as well as bovine casings under the 3 standard UK fresh Pork cooking methods using a proprietary fresh pork recipe and cooked 24 hours after filling and storage at around 4 deg C.

### Example 5 :

Salted sow skins were treateded thus:
a) Initial Soak
b) Fat removal. Set cutter height to effect good visual fat removal without unduly removing good collagen.
c) Unhair- Added 100% equivalent weight of fresh water at 24deg C, 0.6% active sodium sulfide, 0.1% Danol WA and rotated for 1 hour. Added a further 1.2% active sodium sulfide, 0.5% active sodium hydroxide, 0.1% Danol WA and rotated for 2 hours. Stopped vessel and rested for 60 hours then drained liquor.
d) Wash 1.
e) Wash 2.
f) Resultant skin had a ratio of collagen:fat of around 16:1
g) The skins were then further washed with fresh clean chilled water and buffered to a pH of around 6.0 using a mixture of sodium citrate and citric acid. Following this stage the skins were washed to reduce the dissolved salts.
h) These skins were next disintegrated; firstly with a mincing machine and then a plate mill to produce a fibrous paste.
i) This paste was blended together with a mixture of cellulose & acid to form a swollen aqueous paste of constituents:

| | |
|---|---|
| Collagen | 5% |
| HCl | 0.18% |
| Cellulose | 1.66% |

1. This paste was homogenised through a dairy homogeniser to produce a cohesive, smooth swollen gel.
2. This gel was extruded, and simultaneously inflated with air through an annular extruder, to a wet wall thickness of approximately 0.4mm, onto a continuous support belt contained within an ammonia gas chamber.
3. The coagulated tubular casing was passed through a water wash bath to remove residual salt and then a further bath containing glycerol to soften it.
4. The softened casing was dried, in an inflated state, with a multi-zone drier at temperatures between 60 deg C and 120 deg C.
5. The resultant dried tubular casing of nominal 28mm diameter was shirred using a proprietary shirring device.
6. After shirring the casing's moisture level was increased to around 20% prior to packing.

### Example 6 :

Salted sow skins were treated thus:
a) Initial Soak.
b) Fat removal.
c) Unhair- Added 100% equivalent weight of fresh water at 24deg C, 0.7% active sodium hydrosulfide and rotated for 1 hour. Added a further 1.4% active sodium hydrosulfide and 2% lime, 0.1% Danol WA and rotated for 2 hours. Stopped vessel and rested for 60 hours then drained liquor.
d) Wash 1.
e)- Wash 2.
f) Resultant skin had a ratio of collagen:fat of around 10:1
g) The skins were next decalcified through treatment with ammonium sulphate solution.
h) Next they were washed with fresh clean chilled water and buffered to a pH of around 6.0. Following this stage the skins were washed to reduce the dissolved salts.
i) These skins were next disintegrated; firstly with a mincing machine and then a plate mill to produce a fibrous paste.
j) This paste was blended together with a mixture of cellulose & acid to form a swollen aqueous paste of constituents:

| | |
|---|---|
| Collagen | 5% |
| HCl | 0.22% |
| Cellulose | 1.66% |

1. This paste was homogenised through a dairy homogeniser to produce a cohesive, smooth swollen gel.
2. This gel was extruded, and simultaneously inflated with air through an annular extruder, to a wet wall thickness of approximately 0.4mm, onto a continuous support belt contained within an ammonia gas chamber.
3. The coagulated tubular casing was passed through a water wash bath to remove residual salt and then a further bath containing glycerol to soften it.
4. The softened casing was dried, in an inflated state, with a multi-zone drier at temperatures between 60 deg C and 120 deg C.
5. The resultant dried tubular casing of nominal diameter 28mm was shirred using a proprietary shirring device.
6. After shirring the casing's moisture was increased to around 20% prior to packing.

### (No Example 7:)

### Example 8:

1. Salted sow skins were prepared by rehydrating, cleaning, defatting and unhairing using the method described by Example 5.
2. The processed whole skins were next washed with 100% equivalent weight of fresh clean water.
3. The whole skins were next treated with HCl acid solution to provide pH around 2.5.
4. The liquor was discharged from the vessel and the hides dropped into a draining basket for up to 10 minutes to allow further liquor to be removed.
5. The washed acididified swollen skins were firstly minced and then secondly flattened by a roll mill into pieces of higher surface area.
6. These flattened pieces of solids level around 19% were next diluted with water in a Z-blade type mixer to a solids level around 13%.
7. A further water addition and acid addition was made to achieve a solid level of around 11%.
8. The acid swollen paste was next homogenised by passing through a platten with circular holes of 2mm diameter.
9. The paste was-then-transferred-to a Z-blade mixer with a further water addition made. Cellulose was also added to achieve a composition around 6.4% collagen, 0.64% cellulose and 0.27% HCl. The paste was mixed until uniform.
10. The paste was next homogenised again through a 2mm hole platten and then through a dairy homogeniser.
11. The homogenious acid swollen paste was further diluted with water in a Z-blade mixer to achieve a collagen solids of 4.9% and was finally homogenised again using a dairy homogeniser.
12. The acid swollen gel was extruded, and simultaneously inflated with air through an annular extruder, to a wet wall thickness of approximately 0.4mm, onto a continuous support belt contained within an ammonia gas chamber.
13. The coagulated tubular casing was passed through a water wash bath to remove residual salt and then a further bath containing glycerol and sodium carboxymethylcellulose to soften it.
14. The softened casing was dried, in an inflated state, with a multi-zone drier at temperatures arround 60 to 70 deg C.
15. The resultant dried tubular casing of nominal diameter 20mm was shirred using a proprietary shirring device.
16. After shirring the casing's moisture was increased to around 18% prior to packing.
17. Further derivatives of this casing were prepared after first mixing glutaraldeyde with the acid swollen gel prior to extrusion.
18. Further derivatives of this casing, without glutaraldehyde, were prepared by heat curing the casing after shirring. This was done by a slow heating process from ambient condition to 90deg C over 11 hours and then holding at this temperature for 9 hours before cooling the casing and then increasing the moisture content to around 18%.

### Example 9:

a) Salted sow skins were treated in a similar manner to example 5.
b) Acid swollen gel was prepared with constituents 5% collagen 0.2% HCl and 1% cellulose.
c) The acid swollen gel had glutaraldehyde added at 2 different levels to prepare 2 different casings; 50ppm and 100ppm addition respectively. These gels were extruded to form casings of nominal diameter 20mm and treated in the same manner of example 5.

### Final product properties/attributes:

### A) Physical Test data

| | Glutaraldehyde level (ppm in acid swollen gel) | Heat Cure (Yes /No) | Cold Wet Average Tensile (Kg) | Hot Acid Average Tensile (Kg) | Burst Average Weight (kg) | Weight (g/m) |
|---|---|---|---|---|---|---|
| Ex 5 | No | No | 3.51 | 1.24 | 0.84 | 3.0 |
| Ex 6 | No | No | 2.86 | 1.35 | 0.83 | 3.0 |
| Ex 8a | No | No | 3.17 | 1.86 | 1.29 | 2.1 |
| Ex 8b | No | Yes | 3.67 | 2.35 | 1.20 | 2.1 |
| Ex 8c | 100ppm | No | 3.98 | 2.65 | 1.29 | 1.7 |
| Ex 8d | 50ppm | No | 2.66 | 1.55 | 1.16 | 1.7 |
| Ex 9a | 100ppm | No | 4.18 | 1.81 | 1.21 | 2.7 |
| Ex 9b | 50ppm | No | 3.77 | 1.68 | 1.18 | 2.7 |

### D) Product Performance (Fresh)

I. Examples 5, 6 & 7 were stuffed to a nominal 28mm diameter using a proprietary vacuum filler at typical UK production rates of over 600 links per minute.
II. The products performed as well as bovine casings under the 3 standard UK fresh cooking methods using proprietary fresh meat emulsions and cooked 24 hours after filling and storage at around 4 deg C.
III. Individually quick frozen products were blast frozen within 1 hour of stuffing and cooked from the frozen state after 24 hours. The products cooked as well as bovine casing sausages made under the same conditions.

### C) Product Performance ( Processed)

I. Examples 8 & 9 were stuffed to a nominal diameter of 20mm using a proprietary vacuum filler at typical production speeds for wiener sausage. Indeed, these casings were able to endure higher than normal stress through the chuck assembly ( measured by a handheld tensometer when the casing is pulled from the horn through the chuck).
II. The meat emulsion used was a typical Frankfurter recipe.
III. After stuffing the sausages were loaded onto hanging sticks and mounted on a processing trolley ready for primary cooking.
IV. Sausages were subjected to the following typical Wiener process- Process A

| Stage | Time (minutes) | Core sausage temperature (deg C) | Humidity (%RH) | |
|---|---|---|---|---|
| 1-Drying | 15 | 60 | 20 | |
| 2- Maturing | 7 | 76 | 100 | |
| 3- Drying | 20 | 60 | 20 | |
| 4- Smoking | 15 | 68 | 61 | |
| 5- Cooking | 10 | 60 | 20 | |
| 6- Smoking | 15 | 68 | 61 | |
| 7- Cooking | 15 | 78 | 100 | |
| 8- Cooking | 8 | 60 | 20 | |
| 9- Water Shower | 10 | 10 | | |

V. Each product survived the primary process without droppage and each product produced acceptable colour, knack, edibility and good overall appearance when reheated in hot water.
VI. A sample from Example 8b was stuffed with the same proprietary Frankfurter emulsion and the linked chain of sausages were wrapped around a hanging stick.
VII. These were hung from a process stick with longer than normal loops to create extra load and stress: no droppage occurred.

**Process B**

| Stage | Time (minutes) | Core sausage temperature (deg C) | Humidity (%RH) | |
|---|---|---|---|---|
| 1- Cooking | 30 | 82 | 100 | |
| 2- Water shower | 15 | | | |

### Example: 10 a, b & c (various humectant levels)

a) Salted sow skins were prepared by rehydrating, washing, unhairing & mechanically defatting using a method previously disclosed.
b) No additional alkali was used during the unhairing stage apart from sodium sulfide which is itself alkaline.
c) The resultant skin had a ratio of collagen:fat ratio of 25:1
d) The skins were then further washed, buffered to a pH of around 6.0 and then washed again to reduce the level of dissolved salts.
e) These skins were next disintegrated; firstly with a mincing machine and then a plate mill to produce a fibrous paste.
f) This paste was blended together with a mixture of cellulose & acid to form a swollen aqueous paste of constituents:

| | |
|---|---|
| Collagen | 5.5% |
| HCl | 0.275% |
| Cellulose | 1.0% |
| Fat | 0.22% |

1. This paste was homogenised through a dairy homogeniser to produce a cohesive, smooth swollen gel.
2. This gel was extruded, and simultaneously inflated with air, through an annular extruder, to a wet wall thickness of approximately 0.4mm, onto a continuous support belt contained within an ammonia gas chamber.
3. The coagulated tubular casing was passed through a water wash bath to remove residual salt and then a further bath containing glycerol to soften it.
4. The softened casing was dried, in an inflated state, with a multi-zone drier at temperatures between 60 deg C and 120 deg C.
5. The resultant dried tubular casing of nominal 2 1 mm diameter was shirred using a proprietary shirring device.
6. After shirring the casing's moisture level was increased to around 20% prior to packing with the resulting weight measured to be 2.8g/m.
7. A variant of this casing was also produced where the glycerol content was altered.
8. A further variant of this casing was produced where both glycerol & sorbitol were used in the further bath in the proportions of 75 parts glycerol ; 25 parts sorbitol.

**Final casing constituents on dry weight basis**

| Variant | % collagen | % cellulose | % glycerol | % sorbitol | % fat |
|---|---|---|---|---|---|
| 10a | 60.3 | 11.0 | 19.9 | 0 | 2.4 |
| 10b | 63.8 | 11.6 | 15.5 | 0 | 2.6 |
| 10c | 60.3 | 11.0 | 13.5 | 4.5 | 2.6 |

**Final casing Physical attributes**

| Variant | Average Cold Tensile Strength from 10 pieces | Sample standard deviation of CT from 10 pieces | Average Burst Weight from 5 pieces | Sample standard deviation of burst weight from 5 pieces |
|---|---|---|---|---|
| 10a | 2.72Kg | 0.20Kg | 0.62Kg | 0.05Kg |
| 10b | 3.20Kg | 0.10Kg | 0.80Kg | 0.05Kg |
| 10c | 2.93Kg | 0.14Kg | 0.70Kg | 0.08Kg |

### Final casing sausage making attributes

Each product was stuffed using a Handtmann VF80 vacuum filler fitted with a 12mm tube and chuck assembly. To produce links of weight 28g and nominal diameter of 21mm and length 90mm. In all cases the sausages were noted to be tightly filled.

Two filling recipes were used: 1) a lean, coarse, "premium" UK pork breakfast sausage an 2) a "standard" , finely comminuted UK pork breakfast sausage.

Pan frying and grilling of the premium sausages demonstrated the new casings to perform as well as premium sausages made with commercial bovine casings of identical dimensions.

Pan frying, grilling and deep fat frying of the standard sausages demonstrated the new casings to perform as well as standard sausages made with commercial bovine casings of identical dimensions.

Surprisingly, the porcine collagen casing with collagen:cellulose ratio of around 5:1 performed as well as a bovine casing with collagen:cellulose ratio of 2.4:1.

### Example:11 (humectant level of 15.2%DWB)

Salted sow skins were treated in the following manner:
a) Initial Soak..
b) Fat removal.
c) Soak 1.
d) Unhair- Added 100% equivalent weight of fresh water at 24deg C, 0.6% by weight of active sodium sulfide, 0.1% by weight ofDanol WA and rotated for 1 hour. Added 1.2% by weight of sodium sulfide and 0.5% by weight of active sodium hydroxide and rotated for 2 hours. Stopped vessel and rested for 60 hours then drained liquor.
e) Wash 1.
f) Wash 2.
g) Resultant skin had a ratio of collagen:fat ratio of 17:1
h) The skins were then further washed with fresh clean chilled water to a pH of around 6 using a mixture-of sodium citrate and citric acid. Following this stage, the skins were washed to reduce dissolved salts.
i) These skins were next disintegrated; firstly with a mincing machine and then a plate mill to produce a fibrous paste.
j) This paste was blended together with a mixture of cellulose & acid to form a swollen aqueous paste of constituents:

| | |
|---|---|
| Collagen | 5.0% |
| HCl | 0.182% |
| Cellulose | 1.0% |
| Fat | 0.29% |

1. This paste was homogenised through a dairy homogeniser to produce a cohesive, smooth swollen gel.
2. This gel was extruded, and simultaneously inflated with air through an annular extruder, to produce a coagulated tubular casing of wet wall thickness of approximately 0.4mm, onto a continuous support belt contained within an ammonia gas chamber.
3. The coagulated tubular casing was passed through a water wash bath to remove residual salt and then a further bath containing glycerol to soften it.
4. The softened casing was dried, in an inflated state, with a multi-zone drier at temperatures between 60 deg C and 120 deg C.
5. The resultant dried tubular casing of nominal 28mm diameter was shirred using a proprietary shirring device.
6. After shirring the casing's moisture level was increased to around 20% prior to packing with the resulting weight measured to be 3.0g/m.

**Final casing constituents on dry weight basis**

| % collagen | % cellulose | % glycerol | % fat |
|---|---|---|---|
| 62.2 | 12.5 | 15.2 | 3.6 |

**Final casing Physical attributes**

| Product | Average Cold Tensile Strength from 10 pieces | Sample standard deviation of CT from 10 pieces | Average Burst Weight from 5 pieces | Sample standard deviation of burst weight from 5 pieces |
|---|---|---|---|---|
| Porcine 28mm casing ( ex 11) | 3.55Kg | 0.19Kg | 0.98Kg | 0.03Kg |
| Bovine 28mm casing | 3.26Kg | 0.35Kg | 0.93Kg | 0.09Kg |

### Final casing sausage making attributes

The product was stuffed using a Handtmann VF80 vacuum filler fitted with a 15mm tube and chuck assembly to produce links of weight 56g and nominal diameter of 28mm and length 105mm.

Two filling recipes were used: 1) a lean, coarse, "premium" UK pork breakfast sausage and 2) a "standard", finely comminuted UK pork breakfast sausage.

Pan frying and grilling of the premium sausages demonstrated the new casings to perform as well as premium sausages made with commercial bovine casings of identical dimensions.

Pan frying, grilling and deep fat frying of the standard sausages demonstrated the new casings to perform as well as standard sausages made with commercial bovine casings of identical dimensions.

In a separate exercise the porcine casing was stuffed using a Handtmann AL system connected to a Handtmann VF300 vacuum filler fitted with a 15mm tube and chuck assembly to make sausages of weight 56g, length 105mm and diameter nominally 28mm. The meat recipe was a standard, finely comminuted UK pork breakfast sausage. The casing was capable of filling at a rate of 600 links per minute with no faults.

The resultant sausages were cooked:

The pan fry, grill & deep fat fry performance of the porcine casing filled sausages was equivalent to the beef casing filled sausages.

The final porcine casing filled sausage had the same tender mouth feel quality of the bovine casing filled sausage.

### Example: 12 (humectant level of 21.5% DWB)

Salted sow skins were treated in the following manner:
a) Initial Soak.
b) Fat removal.
c) Unhair- Added 100% equivalent weight of fresh water at 24deg C, 0.6% by weight of active sodium sulfide, 0.1% by weight ofDanol WA and rotated for 1 hour. Added 1.2% by weight of sodium sulfide and 0.5% by weight of active sodium hydroxide and rotated for 2 hours. Stopped vessel and rested for 60 hours then drained liquor.
d) Wash 1.
e) Wash 2.
f) Resultant skin had a ratio of collagen:fat ratio of 13:1
g) The skins were then further washed with fresh clean chilled water to a pH of around 6 using a mixture of sodium citrate and citric acid. Following this stage, the skins were washed to reduce dissolved salts.
h) These skins were next disintegrated; firstly with a mincing machine and then a plate mill to produce a fibrous paste.
k) This paste was blended together with a mixture of cellulose & acid to form a swollen aqueous paste of constituents:

| | |
|---|---|
| Collagen | 5.0% |
| HCl | 0.25% |
| Cellulose | 1.0% |
| Fat | 0.3 8% |

1. This paste was homogenised through a dairy homogeniser to produce a cohesive, smooth swollen gel.
2. This gel was extruded, and simultaneously inflated with air through an annular extruder, to a wet wall thickness of approximately 0.4mm, onto a continuous support belt contained within an ammonia gas chamber.
3. The coagulated tubular casing was passed through a water wash bath to remove residual salt and then a further bath containing glycerol.
4. The softened casing was dried, in an inflated state, with a multi-zone drier at temperatures between 60 deg C and 120 deg C.
5. The resultant dried tubular casing of nominal 28mm diameter was shirred using a proprietary shirring device.
6. After shirring the casing's moisture level was increased to around 20% prior to packing with the resulting weight measured to be 3.2g/m.

**Final casing constituents on dry weight basis**

| % collagen | % cellulose | % glycerol | % fat |
|---|---|---|---|
| 56.4 | 11.3 | 21.5 | 4.3 |

**Final casing Physical attributes**

| Product | Average Cold Tensile Strength from 10 pieces | Sample standard deviation of CT from 10 pieces | Average Burst Weight from 5 pieces | Sample standard deviation of burst weight from 5 pieces |
|---|---|---|---|---|
| Porcine 28mm casing ( ex 12) | 3.31Kg | 0.31Kg | 1.10Kg | 0.04Kg |
| Bovine 28mm casing | 3.12Kg | 0.29Kg | 1.14Kg | 0.03Kg |

### Final casing sausage making attributes

The product was stuffed using a Handtmann AL system connected to a Handtmann VF300 vacuum filler fitted with a 15mm tube and chuck assembly to produce links of weight 56g and nominal diameter of 28mm and length 105mm A "standard", finely comminuted UK pork breakfast sausage recipe was used.

The casing was capable of filling at a rate of up to 950 links per minute with no faults.

Pan frying, grilling and deep fat frying of the sausages demonstrated the new casing was able to perform as well as standard sausages made with commercial bovine casings of identical dimensions.

The final porcine casing filled sausage had the same tender mouth feel quality of the bovine casing filled sausage.

### Example 13 & 14 (cellulose free)

1.Young porcine raw material was partially defatted and then disintegrated firstly with a mincing machine and then a plate mill to produce a fibrous paste.
2. This material was then blended together with an acid solution to form a swollen aqueous paste of constituents:

| Example 13 | | Example 14 | |
|---|---|---|---|
| collagen | 4.5% | collagen | 4.5% |
| HCl | 0.15% | lactic acid | 1.5% |
| fat | 1.25% | fat | 0.5% |

3. Each paste was homogenised through a dairy homogeniser to produce a cohesive, smooth swollen gel.
4. Immediately prior to extrusion, Example 13 and Example 14 gel streams had an aqueous solution of glutaraldehyde added at a rate to give 670ppm and 720ppm concentration in the gel, respectively. The crosslinker was metered in continuously and mixed with gel using a multi-paddle mixer.
5. Each gel was extruded, and simultaneously inflated with air through an annular extruder, to a wet wall thickness of approximately 0.4mm and 17mm nominal diameter, onto a continuous support belt contained within an ammonia gas chamber.
6. The coagulated tubular casing was passed through a water wash bath to remove residual salt and then a further bath containing glycerol and sodium carboxymethylcellulose to soften the casing.
7. The softened casing was dried, in an inflated state, with a multi-zone drier at temperatures between 60 deg C and 120 deg C.
8. The resultant dried tubular casing of nominal 21mm diameter was shirred using a proprietary shirring device.
9. After shirring the casing moisture level was increased to around 20% prior to packing with the resultant weight measured to be 2.6g/m.

**Final casing constituents on dry weight basis**

| Example | % collagen | % glycerol | % fat |
|---|---|---|---|
| 13 | 55.6 | 22.8 | 15.4 |
| 14 | 64.8 | 21.4 | 7.2 |

N.B. approximately 5% by weight oil added at shirring and 1% CMC by weight picked up from bath.

**Final casing physical attributes**

| Example | Average Cold Tensile Strength from 10 pieces | Sample standard deviation of CT from 10 pieces | Average Burst Weight from 5 pieces | Sample standard deviation of burst weight from 5 pieces |
|---|---|---|---|---|
| 13 | 2.32Kg | 0. 15Kg | 0.63Kg | 0.02Kg |
| 14 | 2.23Kg | 0.12Kg | 0.61Kg | 0.24Kg |

### Examples 15 & 16 (MHPC and PGA as anti-shrink agents)

a) Separate aqueous solutions ofBenecel MP ( methylhydoxypropylcellulose) from Hercules Inc and Manucol Ester E/RK ( propylene glycol alginate) from Kelco are used to produce to 0.4% & 0.6% by weight respectively following the manufacturers recommendations.
b) Each of these solutions are then blended with a disintegrated collagen dispersion with it's associated fat and HCl to a produce a swollen aqueous paste of constituents:

| Example 15 | | Example 16 | |
|---|---|---|---|
| collagen | 4.5% | collagen | 4.5% |
| HCl | 0.15% | HCl | 0.15% |
| fat | 0.5% | fat | 0.5% |
| MHPC | 0.2% | PGA | 0.3% |

c) Each of the pastes are homogenised through a dairy homogeniser to form a cohesive, smooth swollen gel.
d) These gels are then extruded through an annular extruder and simultaneously inflated with air to a wet wall thickness of approximately 0.4mm, onto a continuous support belt contained within an ammonia gas chamber.
e) Immediately prior to extrusion, Example 15 and Example 16 gel streams may optionally have an addition of an aqueous solution of glutaraldehyde added at a rate of around 700 ppm respectively. The crosslinker can be metered in continuously and mixed with the gel using a multi-paddle mixer. Alternatively the cross-linker could be added to casing after extrusion by direct contact via immersion in a glutaraldehyde solution bath (~75ppm solution by strength).
f) The resultant products' physical properties and performance attributes are similar to those of Example 13 & Example 14.

### Example 17 (Split hide)

Salted sow skins were treated in the following manner:
a) Initial Soak.
b) Fat removal.
c) Soak 1.
d) Unhair- Added 100% equivalent weight of fresh water at 24deg C, 0.6% active sodium sulfide, 0.1% Danol WA and rotated for 1 hour. Added a further 1.5% active sodium sulfide, 2.0% active lime, 0.1% Danol WA and rotated for 12 hours and 30 minutes. Stopped then drained liquor.
e) Wash 1.
f) Wash 2.
g) Split-Hides are processed through a proprietary splitting machine to remove the upper grain layer of the sow skin. The resultant lower corium split was used for further processing. Resultant split skin had a ratio of collagen:fat of around 18:1.
h) The split skins were then further washed with fresh clean chilled water to a pH of around 4.5 using a mixture of sodium citrate and citric acid. Following this stage, the split skins were washed to reduce dissolved salts.
i) These split skins were next disintegrated; firstly with a mincing machine and then a plate mill to produce a fibrous paste.
j) This paste was blended together with a mixture of cellulose & acid to form a swollen aqueous paste of constituents:

| | |
|---|---|
| Collagen | 4.8% |
| HCl | 0.24% |
| Cellulose | 1.0% |
| Fat | 0.27% |

1. This paste was homogenised through a dairy homogeniser to produce a cohesive, smooth swollen gel.
2. This gel was extruded, and simultaneously inflated with air through an annular extruder, to produce a coagulated tubular casing of wet wall thickness of approximately 0.4mm, onto a continuous support belt contained within an ammonia gas chamber.
3. The coagulated tubular casing was passed through a water wash bath to remove residual salt and then a further bath containing glycerol and sodium carboxymethylcellulose to soften it.
4. The softened casing was dried, in an inflated state, with a multi-zone drier at temperatures between 60 deg C and 120 deg C.
5. The resultant dried tubular casing of nominal 28mm diameter was shirred using a proprietary shirring device.
6. After shirring the casing's moisture level was increased to around 20% prior to packing with the resulting weight measured to be 3.0g/m.
7. These skins were capable of being stuffed to make linked sausages using a Handtmann VF80 vacuum filler with a standard UK pork breakfast mixture. Final cooking and eating qualities were satisfactory across grill, pan fry and deep fat fry applications.

### Example 18 (Split limed hides)

Salted sow skins were treated in the following manner:
a) Initial Soak.
b) Fat removal.
c) Wash 1.
d) Soak 2.
e) Unhair- Added 100% equivalent weight of fresh water at 24deg C, 0.6% active sodium sulfide, 0.1% Danol WA and rotated for 1 hour. Added a further 1.5% active sodium sulfide, 2.0% active lime, 0.1% Danol WA and rotated for 12 hours and 30 minutes. Stopped then drained liquor.
f) The collagen skins are washed then decalcified using ammonium sulphate.
g) The splits are next buffered to an internal pH of around 6 with HCl.
h) The splits are next washed in fresh clean water to remove excess salts.
i) The delimed and washed collagen splits are then chopped and ground with water and ice to affect particle reduction with minimal temperature rise. The ground pulp has the following composition:

| | |
|---|---|
| Collagen | 10% - 20% by weight |
| Fat | 0.6% to 1.3% by weight |

j) The collagen pulp is then mixed with dilute lactic and hydrochloric acid, cellulose, water and ice to produce a slurry of the following composition:

| | |
|---|---|
| Collagen | 4.5 - 7.0% by weight |
| Cellulose | 10 - 45 % by weight |
| Acid | 0.15-0.35 |
| Temperature | less than 10 deg C |

k) The collagen slurry is processed through a rotary pin-mill and a dairy homogenizers to produce a cohesive smooth swollen gel.
I) The resultant smooth swollen collagen gel is extruded vertically as a thin-walled tube into a coagulating bath of ammonium sulphate solution to dehydrate the collagen fibrils and collapse the film. The casing tube is exposed to the coagulation liquid both internally and externally to ensure proper coagulation of the film.
m) The tube of collagen casing is then passed through a series of processing tanks depending on casing type and colour
n) The residence time for casing in a particular tank varies from about 8 to 72 sec.

Further processing steps are set out below, depending on the type of food product casing being made.
(A) Fresh sausage casing - manufacturing steps involves :
   1. Coagulation with ammonium sulphate solution at pH>7.
   2. Aluminium sulphate solution treatment.
   3. Softening in an aqueous bath containing a humectant such as glycerol or sorbitol.
(B) Processed meat casing. Manufacturing steps involves:
   1. Coagulation with ammonium sulphate solution at pH>7.
   2. Aluminium sulphate solution treatment.
   3. Softening in an aqueous bath containing a homectant such as glycerol or sorbitol.
   4. Cross-linking with a suitable crosslinker such as gluteraldehyde, glyoxal or liquid smoke.
o) After the casing leaves the last processing tank, it is inflated and dried in a multi-zone dryer at temperatures between 200 C and 300 C (fresh sausage casing is dried at lower temperatures than processed meat casings).
p) The dried casing is shirred on a proprietary shirring machine, rehumidified to a final product moisture between 18 and 28%.
q) End closures can be provided if necessary depending on the particular application and the product is finally boxed and wrapped in an air tight package.
r) The final product stuffing attributes, cooking attributes and eating qualities are similar to those of equivalent bovine casings.

### Example 19 (Dextrose: Alternative cross-linker to glutaraldehyde)

a) A further variant of the casing described in example 10 was produced.
b) Dextrose was added into the bath containing glycerol and sodium carboxymethyl cellulose. The dextrose level was maintained at 400ppm via continuous feed of a concentrated dextrose solution (4,000ppm).
c) The softened casing was dried, in an inflated state, with a multi-zone drier at temperatures between 60 deg C and 120 deg C.
d) The resultant dried tubular casing of nominal 21 mm diameter was shirred using a proprietary shirring device.
e) The shirred strands were packaged into a paper box with holes at each end.
f) The box of shirred casing was heat cured to effect the cross-linking reaction. Firstly the temperature was raised from ambient to 90 deg C in 11 hours at a constant ramp rate. The box was next held at 90 deg C for 9 hours and then allowed to cool to ambient over a period of about 1 hour.
g) After heat curing the casing's moisture level was increased to around 20% prior to packing with the resulting weight measured to be 2.8g/m.

**Final casing constituents on dry weight basis**

| % collagen | % cellulose | % glycerol | % fat |
|---|---|---|---|
| 63.8 | 11.6 | 15.5 | 2.6 |

N.B. 5% by weight oil added at shirring stage and 1% sodium CMC by weight picked up from bath.

**Final casing Physical attributes**

| Variant | Average Cold Tensile Strength from 10 pieces | Sample standard deviation of CT from 10 pieces | Average Burst Weight from 5 pieces | Sample standard deviation of burst weight from 5 pieces |
|---|---|---|---|---|
| 1 | 3.62Kg | 0.24Kg | 0.84Kg | 0.07Kg |

The resultant casing is able to be stuffed satisfactorily using a proprietary stuffing machine to a diameter of around 20mm (smaller than it's initial manufactured size due to the effect of the cross-linker).

A casing of this type is able to be used for processed sausage manufacture such as frankfurters, which utilise finely chopped meat emulsions and undergo a smoke and steam operation.
A typical process is described in Examples 8 & 9 above.

### Example 20 (Porcine collagen with up to 10% of another non-bovine collagen source)

a) Salted sow skins are treated in the same manner as described in Example 17 to yield a split processed skin with collagen:fat ratio of 18:1
b) Salted goat skins are treated in the same manner as described in Example 17 and after splitting and secondary fleshing to yield a skin with collagen:fat ratio of 25:1
c) These skins are next disintegrated with a mincing machine and composited together in the ratio of 9 parts porcine skin to 1 part of caprine (goat) skin to around 10 parts of water.
d) The minced composited collagen is processed through a plate mill to produce a fibrous paste.
e) This paste is blended together with a mixture of cellulose & acid to form a swollen aqueous paste of constituents:

| | |
|---|---|
| Collagen (Porcine) | 4.32% |
| Collagen (Caprine) | 0.48% |
| HCl | 0.24% |
| Cellulose | 0.96% |
| Fat | 0.26% |

f) This paste is homogenised through a dairy homogeniser to produce a cohesive, smooth swollen gel.
g) This gel is extruded, and simultaneously inflated with air through an annular extruder, to produce a coagulated tubular casing of wet wall thickness of approximately 0.4mm, onto a continuous support belt contained within an ammonia gas chamber.
h) -The coagulated tubular casing is passed through a water wash bath to remove residual salt and then a further bath containing glycerol and sodium carboxymethylcellulose to soften it.
i) The softened casing is dried, in an inflated state, with a multi-zone drier at temperatures between 60 deg C and 120 deg C.
j) The resultant dried tubular casing of nominal 28mm diameter is shirred using a proprietary shirring device.
k) After shirring the casing's moisture level is increased to around 20% prior to packing with the resulting weight measured to be 3.0g/m.
1) The resultant casing constituents are on a dry weight basis:

| | |
|---|---|
| Collagen (Porcine) | 54.2% |
| Collagen (Caprine) | 6.0% |
| Glycerol | 18.0% |
| Cellulose | 12.0% |
| Fat | 3.3% |
| Sodium CMC | 1% |
| Shirring oil | 5% |

m) These skins are capable of being stuffed to make linked sausages using a Handtmann VF80 vacuum filler with a standard UK pork breakfast mixture. Final cooking and eating qualities are satisfactory across grill, pan fry and deep fat fry applications.

### Example 21a & b

Two separate batches of salted sow skins were treated separately using the following process :
a) Initial Soak.
b) Fat removal.
c) Unhair- Added 100% equivalent weight of fresh water at 24deg C, 0.6% active sodium sulfide, 0.1% Danol WA and rotated for 1 hour. Added a further 1.5% active sodium sulfide, 0.5% active sodium hydroxide, 0.1% Danol WA and rotated for 12 hours and 30 minutes. Stopped vessel and drained liquor.
d) Wash 1.
e) Wash 2.
f) Resultant skin had a ratio of collagen:fat of around 16:1
g) The skins were then further washed with fresh clean chilled water to a pH of 5 (Example 21a) and to a pH of 4.6 (Example 21b) using a mixture of sodium citrate and citric acid. Following this stage, the skins were washed to reduce dissolved salts.
h) The following stages were also conducted separately with each batch.
i) The skins were next disintegrated; firstly with a mincing machine and then a plate mill to produce a fibrous pastes.
j) These pastes were blended together with a mixture of cellulose & acid to form a swollen aqueous pastes of constituents:

| Example 21a | | Example 21b | |
|---|---|---|---|
| Collagen | 4.8% | Collagen | 5% |
| HCl | 0.21 % | HCl | 0.2% |
| Cellulose | 1.0% | Cellulose | 1.0% |
| Fat | 0.3% | Fat | 0.3% |

9. These pastes were both homogenised through a dairy homogeniser to produce cohesive & smooth swollen gels.
10. These gels were extruded, and simultaneously inflated with air through an annular extruder, to a wet wall thickness of approximately 0.4mm, onto a continuous support belt contained within an ammonia gas chamber to a nominal diameter of 28mm.
11. The coagulated tubular casings were passed through a water wash bath to remove residual salt and then a further bath containing glycerol and sodium carboxymethylcellulose to soften it.
12. The softened casings were dried, in an inflated state, with a multi-zone drier at temperatures between 60 deg C and 120 deg C.
13. The resultant dried tubular casings of nominal 28mm diameter were shirred using a proprietary shirring device.
14. After shirring the casings' moisture level was increased to around 20% prior to packing.

### Final product properties/attributes:

### A)Physical Test data

| Example | Average Cold Wet Tensile (Kg) | Average Hot Acid Tensile (Kg) | Average Burst Weight (Kg) | Weight (g/m) |
|---|---|---|---|---|
| 21a box 1 | 2.96 | 2.07 | 0.84 | 3.2 |
| 21a box 2 | 3.19 | 1.85 | 0.87 | 3.2 |
| 21a box 3 | 3.00 | 1.91 | 0.83 | 3.2 |
| 21a box 4 | 2.83 | 1.85 | 0.94 | 3.2 |
| 21a box 5 | 3.07 | 2.12 | 1.03 | 3.2 |
| 21b box 1 | 3.43 | 2.14 | 1.04 | 3.2 |
| 21b box 2 | 3.48 | 2.23 | 1.11 | 3.0 |

### B) Product Performance

iii- Examples of 21a & 21b were stuffed to a nominal 28 mm diameter using a Handtmann AL system connected to a Handtmann VF300 vacuum filler fitted with a 15mm tube and chuck assembly to produce links of weight 56g and nominal diameter of 28mm and length 105mm A "standard", finely comminuted UK pork breakfast sausage recipe was used.
iv- The casings were capable of filling at rates of between 600 links per minute to 950 links per minute with no faults.
v- Pan frying, grilling and deep fat frying of the sausages demonstrated the new casing was able to perform as well as standard sausages made with commercial bovine casings of identical dimensions.
vi- The final porcine casing filled sausage had the same tender mouth feel quality of the bovine casing filled sausage.

### Example: 22 (7% collagen gel solids and humectant included in extruded gel)

Salted sow skins were treated in the following manner:
a) Initial Soak.
b) Fat removal.
c) Wash 1.
d) Unhair- Added 100% equivalent weight of fresh water at 24deg C, 0.6% active sodium sulfide, 0.1% Danol WA and rotated for 1 hour. Added a further 1.5% active sodium sulfide, 2.0% active lime, 0.1% Danol WA and rotated for 12 hours and 30 minutes. Stopped then drained liquor.
e) The skin had a ratio of collagen: fat of around 20:1
f) The hides were then further "limed" for a period of up to 4 weeks.
g) The hides were then washed with water in a rotating vessel.
h) The whole skins were next treated with 3 to 4 % HCl acid solution in wooden drums resulting in a final pH of around 2.5.
i) The acidified swollen hides were firstly minced and then secondly flattened by a roll mill into pieces of higher surface area.
j) These flattened pieces of solids level around 19% were next diluted with water in a Z-blade type mixer to a solids level around 12%.
k) The acid swollen paste was next homogenised by passing through a platen with circular holes of 2mm diameter.
1) The paste was again transferred to a Z-blade mixer. Additions of water, cellulose, preservative, glycerol and glutaraldehyde were made before mixing to achieve a homogenous acid swollen gel.

**Constituents:**

| | |
|---|---|
| Collagen | 7 % |
| Cellulose | 0.7 % |
| Glycerol | 1.75 % |
| Glutaraldehyde | 0.0042 % |
| Potassium sorbate | 0.07 % |
| Fat | 0.35% |

m) The paste was extruded, and simultaneously inflated with air, through an annular extruder to wall thickness of 0.4 mm
n) The extruded casing was dried, in an inflated state, at a temperature above 60 deg C.
o) After drying, the casing was sprayed by 0.025 % glutaraldehyde solution and dried again
p) Next the casing was sprayed by solution of sodium carbonate.
q) The casing was finally dried and rehumidified to reach a moisture level of approximately 25% before reeling
r) The moisturised reeled casing was shirred using a proprietary shirring device. A casing of this type could be used for processed sausage manufacture such as frankfurters which utilise finely chopped meat emulsions and undergo a smoke and steam operation. A typical process is described in Examples 8 & 9.
s) Rehumidification can also be done after the reeling stage.

### Example 23 Inclusion of up to 10% of another non-bovine collagen source)

s) Salted porcine intestine ( intended for food use) was washed with fresh clean water to reach a conductivity of less than 2mS/cm.
t) The washed intestine ( 16% collagen and 1.5% fat) was treated with an alkaline proteolytic enzyme such as Alcalase 2.5DX at a concentration of up to 2.3% by weight of based on collagen solids for a period of up to 24 hours in the presence of alkali to maintain the pH within the recommended range for the enzyme.
u) The enzyme treated intestines were washed with fresh clean water to remove residual enzyme.
v) The washed treated intestines were minced to obtain a paste of 13.5% collagen.
w) Salted sow skins were treated in the same manner described in example 11 and yielded a processed skin with collagen:fat ratio of 17:1
f) These processed sow skins were next disintegrated with a mincing machine and composited together in the ratio of 9 parts porcine skin collagen to 1 part of intestine collagen to around 10 parts of water.
g) The composited collagen was processed through a plate mill to produce a fibrous paste.
h) This aqueous paste was blended together with a mixture of cellulose & acid to form a swollen aqueous paste of constituents:

| | |
|---|---|
| Collagen (Porcine Skin) | 4.32% |
| Collagen (Porcine Intestine) | 0.48% |
| HCl | 0.24% |
| Cellulose | 0.96% |
| Fat | 0.30% |

i) This paste was homogenised through a dairy homogeniser to produce a cohesive, smooth swollen gel.
j) This gel was extruded, and simultaneously inflated with air, through an annular extruder, to a wet wall thickness of approximately 0.4mm, onto a continuous support belt contained within an ammonia gas chamber.
k) The coagulated tubular casing was passed through a water wash bath to remove residual salt and then a further bath containing glycerol and sodium carboxymethylcellulose to soften it.
1) The softened casing was dried, in an inflated state, with a multi-zone drier at temperatures between 60 deg C and 120 deg C.
m) The resultant dried tubular casing of nominal 21 mm diameter was shirred using a proprietary shirring device.
n) After shirring the casing's moisture level was increased to around 20% prior to packing with the resulting weight measured to be 2.6g/m.
o) The resultant casing constituents were found to be on a dry weight basis:

| | |
|---|---|
| Collagen (Porcine Skin) | 54.0% |
| Collagen (Porcine Intestine) | 5.9% |
| Glycerol | 17.8% |
| Cellulose | 12.0% |
| Fat | 3.8% |
| Sodium CMC | 1% |
| Shirring oil | 4.7% |

p) These skins were capable of being stuffed to make linked sausages using a Handtmann VF80 vacuum filler with a standard UK pork breakfast mixture. Final cooking and eating qualities were satisfactory across grill, pan fry and deep fat fry applications.

### Test Methods:

(i)**Cold Wet Tensile** - Cut casing into 15cm long pieces. Set the gap on the Instron model 5544 to 10cm and ensure the programme is set to pull at a rate of 400mm/minute. To conduct the test, each test piece is folded in half and the folded section is immersed in iced water for 60 seconds. (The unfolded section should remain above the iced water to keep it dry). Then the test piece is removed; unfolded and the excess water shaken-off. The dry ends of the sample are clamped between the grips and the tensile pull applied until the casing breaks. It is normal for 10 separate tests to be conducted.
(ii)**Hot Acid Tensile** - Cut casing into 15cm long pieces. Set the gap on the Instron model 5544 to 5 cm and ensure the programme is set to pull at a rate of 1000 mm/minute. To conduct the test each test piece is folded in half and the folded section is immersed in 0.1M HCl at 70 deg C for 60 seconds. (The unfolded section should remain above the acid to keep it dry). Then the test piece is removed, unfolded and the excess acid shaken-off. The dry ends of the sample are clamped between the grips and the tensile pull applied until the casing breaks.
(iii)**Weight** - The weight is measured by simply weighing a full strand of casing and dividing this value by the total measured length of casing.
(iv)**Burst Weight** - This test is a predictor of the stuffing performance of casing. To carry out the test approximately 4.5 metres of casing is selected and a knot is tied at one end. The open end is drawn over a tube and the assembly is attached to a support with a load cell. A funnel is inserted into the assembly and a water feed pipe is connected to the funnel.

The knotted end of the casing is suspended directly under the funnel assembly and the load cell is tared to zero. Water at ambient temperature ~ 20deg C is metered into the open end of the casing at a rate of 1.5 litres per minute.

The load cell continues to measure the rise in the load and records the maximum value reached at the point where the casing bursts.

The casing is inspected to determine the point of rupture. The test is repeated a further 4 times and the average and standard deviation are recorded.

Any single test value where the knot became untied is disregarded.

## Claims

1. An extruded tubular food-product casing made from an extrudable gel; the casing, on a dry weight basis, comprising collagen, fat, and a humectant, and wherein the collagen content of the casing consists essentially of porcine collagen and the ratio of collagen to fat is at least 2.5 to 1.

2. A casing as claimed in claim 1 wherein the humectant is glycerol which is present in the range of 14 to 25, preferably 16-22% on a dry weight basis.

3. A casing as claimed in claim 2 wherein a proportion of the glycerol is replaced by the same weight of a food grade polyol, such as sorbitol or mannitol or mixtures thereof.

4. A casing as claimed in any preceding claim wherein the casing includes an agent for modifying the shrink tension of the casing.

5. A casing as claimed in claim 4 wherein the agent is cellulose.

6. A casing as claimed in claim 4 wherein the agent is selected from the group comprising methyl cellulose, methyl hydroxypropyl cellulose, non-ionic alginates (preferably propylene glycol alignate), gums or starches or combinations thereof.

7. A casing as claimed in any preceding claim wherein the collagen content of the casing is free of bovine collagen.

8. A casing as claimed in any preceding claim wherein the collagen content of the casing consists of only porcine collagen.

9. A casing as claimed in any one of claims 1 to 7 wherein the collagen content of the casing consists of a mixture of porcine collagen and other collagen which is non-bovine collagen.

10. A casing as claimed in claim 9 wherein porcine collagen forms at least 85% of the gel, preferably at least 90% of the gel on a dry weight basis.

11. A casing as claimed in claim 9 or 10 wherein the non-bovine collagen is derived from sheep, goats, poultry, birds or fish.

12. A casing as claimed in preceding claim wherein the porcine collagen is derived from pig hide or intestine.

13. A casing as claimed in claim 11 wherein the hides are full hides.

14. A casing as claimed in claim 11 wherein the sow hides and young pig hides are split hides.

15. A casing as claimed in any of claims 12 to 14 wherein the pig hide is sow hide.

16. A casing as claimed in any of claims 11 to 15 wherein at least 85%, and preferably at least 90%, of the porcine collagen content of the casing is derived from pig hide.

17. A casing as claimed in any preceding claim wherein the fat content is less than or equal to 30%, preferably less or equal to 25% and more preferably less than or equal to 20% and most preferably less than 10% on a dry weight basis.

18. A casing as claimed in claim 17 wherein the fat content is not less than 3% and preferably not less than 1.%.

19. A casing according to any of claims 1 to 16 wherein the ratio of collagen to fat is at least 3, particularly at least 3.5 especially at least 4 to 1, and most especially above 10 to 1.

20. A casing according to claim 19 wherein the ratio of collagen to fat is in the range 2.5:1 to 20:1 or in the range 15:1 to 25:1.

21. A casing as claimed in any preceding claim wherein the porcine collagen is derived from alkaline treated sow hides or alkaline treated young pig hides.

22. A casing as claimed in claim 21 wherein the porcine collagen is derived from limed sow hides or limed young pig hides.

23. A casing as claimed in any preceding claim wherein the collagen solids content, on a weight basis, in the extrudable gel is 3.5 to 10% of the gel.

24. A casing as claimed in claim 23 wherein the collagen solids content on a weight basis is in the range 4% to 7% of the extrudable mixture.

25. A casing as claimed in any preceding claim wherein the cold wet tensile strength of the casing in the longitudinal direction is at least 2.0 Kg, and preferably 2.5 Kg.

26. A casing as claimed in any preceding claim wherein the burst strength of the casing is at least 0.5 Kg, and preferably at least 0.6 Kg and more preferably at least 0.8Kg.

27. A casing as claimed in any preceding claim wherein said casing includes a cross-linking agent.

28. A casing as claimed in any preceding claim wherein the casing includes a colouring and/or flavouring agent.

29. A porcine collagen casing derived from split sow hides, the collagen casing having aratio of collagen to fat of at least 2.5 to 1.

30. A sow hide for use in a process of manufacturing a casing as claimed in any one of claims 1 to 29.

31. A split sow hide for use in a process of manufacturing a casing as claimed in any one of claims 1 to 29.

32. A pork sausage having a porcine collagen casing wherein the ratio of collagen to fat is at least 2.5 to 1.

33. A method of manufacturing a tubular food-product casing comprising the steps of
obtaining a source of porcine collagen,
processing the collagen including partially defatting the collagen and acidifying
and homogenising the collagen to produce a substantially fibrous paste;
processing the paste to form an extrudable gel having a collagen solids content in the range of 4% to 7% by weight of the gel, and extruding the gel to form a tubular casing and coagulating the extruded casing to produce a tubular casing with a ratio of collagen to fat of at least 2.5 to 1.

## Patentansprüche

1. Extrudierte röhrenförmige Nahrungsmittelproduktltülle, hergestellt aus einem extrudierbaren Gel, wobei die Hülle auf Trockengewichtsbasis Kollagen, Fett und ein Feuchthaltemittel umfasst und wobei der Kollagengehalt der Hülle im Wesentlichen aus Schweinekollagen besteht und das Verhältnis von Kollagen zu Fett mindestens 2,5 zu 1 beträgt.

2. Hülle nach Anspruch 1, wobei das Feuchthaltemittel Glycerin ist, das im Bereich von 14 bis 25, bevorzugt 16 - 22 %, auf das Trockengewicht bezogen, vorliegt.

3. Hülle nach Anspruch 2, wobei ein Teil des Glycerins durch das gleiche Gewicht eines Polyols von Nahrungsmittelqualität wie Sorbit oder Mannit oder Mischungen derselben ersetzt ist.

4. Hülle nach einem der vorhergehenden Ansprüche, wobei die Hülle ein Mittel für das Modifizieren der Schrumpfspannung der Hülle umfasst.

5. Hülle nach Anspruch 4, wobei das Mittel Cellulose ist.

6. Hülle nach Anspruch 4, wobei das Mittel aus der Gruppe ausgewählt ist bestehend aus Methylcellulose, Methylhydroxypropylcellulose, nichtionischen Alginaten (bevorzugt Propylenglycolalginat), Gummiarten oder Stärken oder Kombinationen derselben.

7. Hülle nach einem der vorhergehenden Ansprüche, wobei der Kollagengehalt der Hülle von Rinderkollagen frei ist.

8. Hülle nach einem der vorhergehenden Ansprüche, wobei der Kollagengehalt der Hülle nur aus Schweinekollagen besteht.

9. Hülle nach einem der Ansprüche 1 bis 7, wobei der Kollagengehalt der Hülle aus einer Mischung von Schweinekollagen und anderem Kollagen besteht, das ein Nichtrindkollagen ist.

10. Hülle nach Anspruch 9, wobei Schweinekollagen mindestens 85 % des Gels, bevorzugt mindestens 90 % des Gels auf Trockengewichtsbasis bildet.

11. Hülle nach Anspruch 9 oder 10, wobei das Nichtrindkollagen von Schafen, Ziegen, Geflügel, Vögeln oder Fischen deriviert ist.

12. Hülle nach einem der Ansprüche, wobei das Schweinekollagen von Schweinehaut oder- eingeweide deriviert ist.

13. Hülle nach Anspruch 11, wobei die Häute ganze Häute sind.

14. Hülle nach Anspruch 11, wobei die Häute von Säuen und Häute junger Schweine gespaltene Häute sind.

15. Hülle nach einem der Ansprüche 12 bis 14, wobei die Schweinehaut die Haut einer Sau ist.

16. Hülle nach einem der Ansprüche 11 bis 15, wobei mindestens 85 % und bevorzugt mindestens 90 % des Scltweinekollagengehalts der Hülle von Schweinehaut deriviert sind.

17. Hülle nach einem der vorhergehenden Ansprüche, wobei der Fettgehalt weniger als oder gleich 30 %, bevorzugt weniger als oder gleich 25 % und noch bevorzugter weniger als oder gleich 20 % und am bevorzugtesten weniger als 10%, auf Trockengewichtbasis, ist.

18. Hülle nach Anspruch 17, wobei der Fettgehalt nicht weniger als 3 % und bevorzugt nicht weniger als 1 %, ist.

19. Hülle nach einem der Ansprüche 1 bis 16, wobei das Verhältnis von Kollagen zu Fett mindestens 3, insbesondere mindestens 3,5, vor allem mindestens 4 zu 1 und am spezifischsten mehr als 10 zu 1 beträgt.

20. Hülle nach Anspruch 19, wobei das Verhältnis von Collagen zu Fett im Bereich von 2,5:1 bis 20:1 oder im Bereich von 15:1 bis 25:1 liegt.

21. Hülle nach einem der vorhergehenden Ansprüche, wobei das Schweinekollagen von alkalisch behandelten Häuten von Säuen oder alkalisch behandelten Häuten junger Schweine deriviert ist.

22. Hülle nach Anspruch 21, wobei das Schweinekollagen von kalkbehandelten Häuten von Säuen oder kalkbehandelten Häuten junger Schweine deriviert ist.

23. Hülle nach einem der vorhergehenden Ansprüche, wobei der Kollagenfeststoffgehalt im extrudierbaren Gel auf Gewichtsbasis im Bereich von 3,5 % bis 10 %, auf das Gel bezogen, liegt.

24. Hülle nach Anspruch 23, wobei der Kollagenfeststoffgehalt auf Gewichtsbasis im Bereich von 4 % bis 7 %, auf die extrudierbare Mischung bezogen, liegt.

25. Hülle nach einem der vorhergehenden Ansprüche, wobei die Kalt-Nass-Zugfestigkeit der Hülle in Längsrichtung mindestens 2,0 kg und bevorzugt 2,5 kg beträgt.

26. Hülle nach einem der vorhergehenden Ansprüche, wobei die Berstfestigkeit der Hülle mindestens 0,5 kg und bevorzugt mindestens 0,6 kg und noch bevorzugter mindestens 0,8 kg beträgt

27. Hülle nach einem der vorhergehenden Ansprüche, wobei die Hülle ein Vernetzungsmittel enthält.

28. Hülle nach einem der vorhergehenden Ansprüche, wobei die Hülle ein Färbemittel und/oder einen Geschmacksstoff enthält.

29. Schweinekollagenhülle von gespaltenen Häuten von Säuen deriviert, wobei die Kollagenhülle ein Verhältnis von Kollagen zu Fett von mindestens 2,5 zu 1 aufweist.

30. Haut einer Sau zur Verwendung bei einem Verfahren zum Herstellen einer Hülle nach einem der Ansprüche 1 bis 29.

31. Gespaltene Haut einer Sau zur Verwendung bei einem Verfahren zum Herstellen einer Hülle nach einem der Ansprüche 1 bis 29.

32. Schweinswurst mit einer Schweinekollagenhülle, wobei das Verhältnis von Kollagen zu Fett mindestens 2,5 zu 1 beträgt.

33. Methode zum Herstellen einer röhrenförmigen Nahrungsmittelprodukthülle umfassend die Schritte des:
Erhaltens einer Quelle von Schweinekollagen,
Verarbeitens des Kollagens einschließlich teilweises Entfetten des Kollagens and Ansäuern und Homogenisieren des Kollagens unter Bildung einer im Wesentlichen faserigen Paste;
Verarbeitens der Paste unter Bildung eines extrudierbaren Gels, das einen Kollagenfeststoffgehalt im Bereich von 4 bis 7 Gew.-%, auf das Gel bezogen, aufweist und Extrudierens des Gels unter Bildung einer röhrenförmigen Hülle und Koagulierens der extrudierten Hülle unter Bildung einer röhrenförmigen Hülle mit einem Verhältnis von Kollagen zu Fett von mindestens 2,5 zu 1.

## Revendications

1. Enveloppe de produit alimentaire tubulaire extrudée préparée à partir d'un gel extrudable; ladite enveloppe, sur une base de poids sec, comprenant du collagène, de la matière grasse, et un agent humidifiant, et où le contenu en collagène de l'enveloppe consiste essentiellement en collagène de porc et le rapport du collagène à la matière grasse est d'au moins 2,5/l.

2. Enveloppe selon la revendication 1 dans laquelle l'agent humidifiant est le glycérol qui est présent à raison de 14 à 25, de préférence 16 à 22 % sur une base de poids sec.

3. Enveloppe selon la revendication 2 dans laquelle une proportion du glycérol est remplacée par le même poids d'un polyol de qualité alimentaire, tel que le sorbitol ou le mannitol ou des mélanges de ceux-ci.

4. Enveloppe selon l'une quelconque des revendications précédentes dans laquelle l'enveloppe inclut un agent permettant de modifier la tension de rétraction de l'enveloppe.

5. Enveloppe selon la revendication 4 dans laquelle l'agent consiste en cellulose.

6. Enveloppe selon la revendication 4 dans laquelle l'agent est choisi dans le groupe comprenant la méthylcellulose, la méthylhydroxypropylcellulose, les alginates non ioniques (de préférence alginate de propylèneglycol), les gommes ou les amidons ou leurs combinaisons.

7. Enveloppe selon l'une quelconque des revendications précédentes dans laquelle le contenu en collagène de l'enveloppe est exempt de collagène bovin.

8. Enveloppe selon l'une quelconque des revendications précédentes dans laquelle le contenu en collagène de l'enveloppe consiste uniquement en collagène porcin.

9. Enveloppe selon l'une quelconque des revendications 1 à 7 dans laquelle le contenu en collagène de l'enveloppe consiste en un mélange de collagène porcin et d'un autre collagène qui est du collagène non bovin.

10. Enveloppe selon la revendication 9 dans laquelle le collagène porcin forme au moins 85 % du gel, de préférence au moins 90 % du gel sur une base de poids sec.

11. Enveloppe selon la revendication 9 ou 10 dans laquelle le collagène non bovin provient de mouton, chèvre, volaille, oiseau ou poisson.

12. Enveloppe selon l'une quelconque des revendications précédentes dans laquelle le collagène porcin provient de peau ou d'intestin de porc.

13. Enveloppe selon la revendication 11 dans laquelle les peaux sont des peaux entières.

14. Enveloppe selon la revendication 11 dans laquelle les peaux de truie et les peaux de jeune porc sont des peaux séparées.

15. Enveloppe selon l'une quelconque des revendications 12 à 14 dans laquelle la peau de porc est une peau de truie.

16. Enveloppe selon l'une quelconque des revendications 11 à 15 dans laquelle au moins 85 %, et de préférence au moins 90 %, du contenu en collagène porcin de l'enveloppe provient de peau de porc.

17. Enveloppe selon l'une quelconque des revendications précédentes dans laquelle la teneur en matière grasse est inférieure ou égale à 30 %, de préférence inférieure ou égale à 25 % et plus préférentiellement inférieure ou égale à 20 %, et le plus préférentiellement inférieure à 10 % sur une base de poids sec.

18. Enveloppe selon la revendication 17 dans laquelle la teneur en matière grasse n'est pas inférieure à 3 % et de préférence pas inférieure à 1 %.

19. Enveloppe selon l'une quelconque des revendications 1 à 16 dans laquelle le rapport du collagène à la matière grasse est d'au moins 3/1, en particulier d'au moins 3,5/1, plus particulièrement d'au moins 4/1, et le plus particulièrement supérieur à 10/1.

20. Enveloppe selon la revendication 19 dans laquelle le rapport du collagène à la matière grasse se situe dans la gamme de 2,5/l à 20/l ou dans la gamme de 15/1 à 25/1.

21. Enveloppe selon l'une quelconque des revendications précédentes dans laquelle le collagène porcin provient de peaux de truie traitées en milieu alcalin ou de peaux de jeune porc traitées en milieu alcalin.

22. Enveloppe selon la revendication 21 dans laquelle le collagène porcin provient de peaux de truie chaulées ou de peaux de jeune porc chaulées.

23. Enveloppe selon l'une quelconque des revendications précédentes dans laquelle le contenu en matières solides de collagène, sur une base pondérale, dans le gel extrudable représente 3,5 à 10 % du gel.

24. Enveloppe selon la revendication 23 dans laquelle le contenu en matières solides de collagène sur une base pondérale se situe dans la gamme de 4% à 7% du mélange extrudable.

25. Enveloppe selon l'une quelconque des revendications précédentes dans laquelle la résistance à la traction à l'état mouillé froid de l'enveloppe dans le sens longitudinal est d'au moins 2,0 kg, et de préférence de 2,5 kg.

26. Enveloppe selon l'une quelconque des revendications précédentes dans laquelle la résistance à l'éclatement de l'enveloppe est d'au moins 0,5 kg, et de préférence d'au moins 0,6 kg et plus préférentiellement d'au moins 0,8 kg.

27. Enveloppe selon l'une quelconque des revendications précédentes dans laquelle ladite enveloppe inclut un agent réticulant.

28. Enveloppe selon l'une quelconque des revendications précédentes dans laquelle l'enveloppe inclut un agent colorant et/ou aromatisant.

29. Enveloppe faite de collagène porcin provenant de peaux de truie séparées, l'enveloppe de collagène ayant un rapport du collagène à la matière grasse d'au moins 2,5/1.

30. Peau de truie à utiliser dans un procédé de fabrication d'une enveloppe selon l'une quelconque des revendications 1 à 29.

31. Peau de truie séparée à utiliser dans un procédé de fabrication d'une enveloppe selon l'une quelconque des revendications 1 à 29.

32. Saucisse de porc ayant une enveloppe faite de collagène porcin où le rapport du collagène à la matière grasse est d'au moins 2,5/1.

33. Procédé de fabrication d'une enveloppe de produit alimentaire tubulaire comprenant les étapes de :
obtention d'une source de collagène porcin,
traitement du collagène incluant un dégraissage partiel du collagène et une acidification et une homogénéisation du collagène pour produire une pâte substantiellement fibreuse;
traitement de la pâte pour former un gel extrudable ayant une teneur en matières solides de collagène dans la gamme de 4 % à 7 % en poids du gel, et extrusion du gel pour former une enveloppe tubulaire et coagulation de l'enveloppe extrudée pour produire une enveloppe tubulaire avec un rapport du collagène à la matière grasse d'au moins 2,5/1.
